# EUROPEAN PATENT APPLICATION

(11) **EP 2 924 077 A1**
(43) Date of publication of application: **30.09.2015**
(21) Application number: 15160233.1
(22) Date of filing: 23.03.2015
(51) Int. Cl.: C09D 1/00, C09D 7/00, C09D 7/12, B01J 21/00

(54) **PHOTOCATALYST COATING COMPOSITION**

(30) Priority: 24.03.2014 JP 2014059376
(71) Applicant: Toto Ltd., Fukuoka 802-8601 (JP)
(72) Inventor: Shichi, Tetsuya, Fukuoka, Tokyo 8028601 (JP); Tamura, Mari, Fukuoka, Tokyo 8028601 (JP); Kataoka, Kyoko, Fukuoka, Tokyo 8028601 (JP); Kaneko, Shotaro, Fukuoka, Tokyo 8028601 (JP)
(74) Representative: Grünecker Patent- und Rechtsanwälte PartG mbB

(57) **Abstract**

There is provided a photocatalyst coating composition that is capable of forming a smooth and even photocatalyst coated film without the formation of aggregated particles. The photocatalyst coating composition according to the present invention includes photocatalyst particles, inorganic oxide particles other than the photocatalyst particles, a dispersion medium composed mainly of water, and a thickening agent, wherein the composition has a viscosity of 0 mPa·s or more to 10 mPa·s or less and, when the concentration of the composition is condensed tenfold, has a viscosity of not less than 40 mPa·s as determined under conditions of a shear rate of 1.0 s⁻¹ and a temperature of 25°C with a rheometer.

## Description

### FIELD OF INVENTION

The present invention relates to a photocatalyst coating composition that is capable of forming a highly transparent photocatalyst coated film on a surface of a base.

### BACKGROUND ART

Photocatalysts such as titanium oxide have recently become utilized in many applications such as exterior materials for buildings. Photoexcited photocatalysts can decompose various harmful substances, and a surface of a base coated with photocatalysts can be cleaned by taking advantage of this property. Further, photoexcited photocatalysts can hydrophilify a surface of a base coated with the photocatalyst, and this hydrophilicity allows contaminants deposited on the surface to be easily washed away with water. Such photocatalyst coated films are widely known to be formed by coating a coating liquid containing a photocatalyst. Photocatalyst coated films are preferred to be transparent from the viewpoints of the prevention of the damage of design of bases such as exterior materials and efficient photoexcitation.

An art that hydrophilicity is imparted to a surface of glasses, mirrors and the like using an aqueous dispersion containing photocatalyst particles and an inorganic binder as a coating liquid containing a photocatalyst is known (see, for example, PTL 1: JP 2001-89706A). According to this art, the transparency of a coated film can be enhanced by highly dispersing fine photocatalyst particles and an inorganic binder such as an alkali silicate. Further, surfactants or thickening agents are added to increase the viscous property of the dispersion.

A Coating liquid is required to have such a property that a photocatalyst and an inorganic binder component are stably dispersed in the liquid, and these components are not aggregated in a coated film formed with the liquid. Nevertheless, there is a limitation on the addition of additives from the viewpoints of ensuring the adhesion of the coated film, of ensuring the transparency of the coated film, and of avoiding a possibility that the transparency of the coated film is damaged due to photocatalytic decomposition. In consideration of, for example, objects to be coated and coating conditions, it is preferable that coating liquids have properties suitable for them. For example, when coating liquids are applicable to existing vertical glass windows or exterior walls, a certain level of viscosity is desirable. An increase in viscosity sometimes causes uneven coating, and the uneven coating sometimes lowers leveling properties of the wet film and disadvantageously enhances the haze of the photocatalyst coated film. The addition of additives for regulating physical properties is subject to the same limitation as described above. Due to such limitations, coating liquids that can form good photocatalyst coated films have still been demanded.

### [Citation List]

### [Patent Literature]

[PTL 1] JP 2001-89706A

### SUMMARY OF THE INVENTION

The present inventors have now found that coating liquids that can prevent the aggregation of photocatalyst particles and other particulate components in a process of drying a wet film and can form smooth and even photocatalyst coated films can be realized by regulating the viscosity of coating liquids to a certain range under specific conditions.

Accordingly, an object of the present invention is to provide a photocatalyst coating composition that is capable of forming a smooth and even photocatalyst coated film without the production of aggregated particles.

According to an aspect of the present invention, there is provided a photocatalyst coating composition comprising photocatalyst particles, inorganic oxide particles other than the photocatalyst particles, a dispersion medium mainly composed of water, and a thickening agent, wherein
the composition has a viscosity of 0 mPa·s or more to 10 mPa·s or less and, when the concentration of the composition is condensed tenfold, has a viscosity of not less than 40 mPa·s as determined under conditions of a shear rate of 1.0 s⁻¹ and a temperature of 25°C with a rheometer.

In the present invention, the photocatalyst coating composition contains a thickening agent so as to show the following rheological properties. The photocatalyst coating composition according to the present invention has a low viscosity and, thus, has a high level of fluidity and a high leveling property immediately after coating. Further, as a wet film formed of the photocatalyst coating composition that is applied to a base and afterward spreads in a wet state on a surface of the base is dried, the concentration of the thickening agent increases, leading to an increase in the viscosity of the wet film. An increase in viscosity causes a lowering in fluidity, and, thus, the aggregation of the photocatalyst particles and the inorganic oxide particles contained in the photocatalyst coating composition is suppressed. Thus, smooth and even photocatalyst coated films can be formed without the production of aggregated particles.

According to the present invention, there is provided a photocatalyst coating composition that is capable of forming a smooth and even photocatalyst coated film without the production of aggregated particles.

### BRIEF DESCRIPTION OF THE DRAWINGS

[Fig. 1] Fig. 1 is a graph showing viscosity in Reference Examples 1 to 6.
[Fig. 2] Fig. 2 is a graph showing the haze of photocatalytic bodies obtained using photocatalyst coating compositions prepared in Examples 1 to 5 and Comparative Examples 1 to 7.
[Fig. 3] Fig. 3 is a graph showing the shear rate-viscosity curve of photocatalyst coating compositions prepared in Example 2, Reference Example 7, and Reference Example 8.
[Fig. 4] Fig. 4 is a graph showing the shear rate-viscosity curve of photocatalyst coating compositions prepared in Comparative Example 1, Reference Example 9, and Reference Example 10.
[Fig. 5] Fig. 5 is a graph showing the relationship between the total solid concentration (times) and the viscosity at a shear rate of 1.0 s⁻¹ in each of three types of photocatalyst coating compositions with different total solid concentrations for each of the photocatalyst coating compositions of Examples 1 to 5 and Comparative Example 7 that contains a thickening agent and in each of three types of photocatalyst coating compositions with different total solid concentrations for the photocatalyst coating composition of Comparative Example 1 that are free from a thickening agent.

### DETAILED DESCRIPTION OF THE INVENTION

### Photocatalyst particles

Photocatalyst particles preferably usable in the present invention are photocatalyst particles of at least one selected from anatase-type titanium oxide, rutile-type titanium oxide, brookite-type titanium oxide, zinc oxide, tin oxide, niobium oxide, and strontium titanate. Among them, the anatase-type titanium oxide has high photocatalytic activity and high hydrophilification effect and thus is suitable. Photocatalyst particles having enhanced visible light responsiveness, that is, photocatalyst particles doped with elements such as nitrogen and photocatalyst particles with a compound of copper or iron supported on the surface thereof are usable as these photocatalyst particles.

The particle diameter of the photocatalyst particles is preferably 1 nm or more to 50 nm or less, more preferably 5 nm or more to 20 nm or less. Photocatalytic activity and hydorphilifiability can be satisfactorily exerted when the particle diameter is not less than 1 nm, more preferably not less than 5 nm. When the particle diameter is not more than 50 nm, more preferably not more than 20 nm, visible light is less likely to be scattered and, thus, highly transparent photocatalyst dry films can be obtained. The particle diameter is calculated as a number mean value determined by measuring the length of 100 particles observed in a fracture surface of a photocatalyst dry film prepared by a process described later, under a scanning electron microscope at a magnification of 200,000 times. When the shape of the particles observed is substantially circular, the length of the particles means the diameter of the particles. When the shape of particles observed is noncircular, the approximate length of the particles is calculated as ((major axis + minor axis)/2).

The concentration of the photocatalyst particles is preferably 0.05% or more by mass to 5% or less by mass, more preferably 0.1% or more by mass to 1% or less by mass. When the photocatalyst particles are contained in this amount range, photocatalytic activity and hydrophilifiability can be satisfactorily exerted and, at the same time, good transparency can be obtained by virtue of the prevention of the formation of photocatalyst coated films having an excessively high thickness.

### Inorganic oxide particles

Inorganic oxide particles preferably usable in the present invention are fine particles of oxides that are different from the photocatalyst particles and are oxides of at least one selected from silicon oxide, aluminum oxide, zirconium oxide, hafnium oxide, and cerium oxide and others. Among them, silicon oxide fine particles are excellent as binders and, thus, have a high adhesion to the base of the photocatalyst coated film and are particularly preferred.

The particle diameter of the inorganic oxides fine particles is preferably not more than 50 nm. When the particle diameter is in this range, visible light is less likely to be scattered and highly transparent photocatalyst coated films can be obtained. Further, when the particle diameter is not more than 20 nm, the effect of the inorganic oxides fine particles as the binders is increased and the adhesion of the photocatalyst coated film is excellent. Here the particle diameter is calculated as a number mean value determined by measuring the length of 100 particles observed in a fracture surface of a photocatalyst coated film prepared by a process described later, under a scanning electron microscope at a magnification of 200,000 times. When the shape of the particles observed is substantially circular, the length of the particles means the diameter of the particles. When the shape of the particles observed is noncircular, the approximate length of the particles is calculated as ((major axis + minor axis)/2).

The concentration of the inorganic oxide fine particles is preferably 0.05% or more by mass to 5% or less by mass, more preferably 0.1% or more by mass to 1% or less by mass. When the inorganic oxide particles are contained in this amount range, the effect of the inorganic oxide fine particles as the binders can be satisfactorily exerted and, at the same time, good transparency can be obtained by virtue of the prevention of the formation of photocatalyst coated films having an excessively high thickness.

### Dispersion medium

In the photocatalyst coating composition according to the present invention, the dispersion medium is mainly composed of water. Here the expression "dispersion medium mainly composed of water" means a dispersion medium having a water content of 60% or more by mass to 100% or less by mass, preferably 80% or more by mass to 100% or less by mass. When a mixed solvent obtained by mixing water and an organic solvent other than water is used, the organic solvent soluble in water is preferably usable.

Preferred Examples of the water-soluble organic solvents include methanol, ethanol, 1-propanol, 2-propanol, 1-butanol, 2-butanol, t-butanol, pentanol, hexanol, cyclobutanol, cyclopentanol, cyclohexanol, ethylene glycol, propylene glycol, glycerin, methyl cellosolve, and ethyl cellosolve and others. In the present invention, at least one organic solvent selected from the above group is usable.

Preferably, the photocatalyst coating composition according to the present invention contains the dispersion medium in such an amount that the solid concentration is 0.1% or more by mass to 10% or less by mass. When the dispersion medium is contained in this amount range, photocatalyst coated films that are transparent and have an excellent appearance can be obtained.

Preferably, the dispersion medium has a pH value of 6 or more to 8 or less. The pH range of the dispersion medium is considerably far from the isoelectric point of the photocatalyst particles or the isoelectric point of the inorganic oxide fine particles, and, thus, the photocatalyst particles or the inorganic oxide particles can be stably dispersed. Consequently, the production of aggregated particles can be suppressed, and photocatalyst coated films that are transparent and have an excellent appearance can be obtained.

### Thickening agent

In the present invention, the thickening agent has a viscosity of 0 mPa·s or more to 10 mPa·s or less as a viscosity of a solution containing 0.1% by mass of the thickening agent dissolved in the dispersion medium. And the thickening agent has a viscosity of not less than 1,000 mPa·s as a viscosity of a solution containing 2% by mass of the thickening agent dissolved in the dispersion medium. When the viscosity of the solution obtained by dissolving 0.1% by mass of the thickening agent in the dispersion medium is regulated to 0 mPa·s or more to 10 mPa·s or less, the difference in viscosity between the solution and the dispersion medium is not significant and, thus, the photocatalyst coating composition that, when coated, has an excellent leveling property can be obtained. When the viscosity of the solution obtained by dissolving 2% by mass of the thickening agent in the dispersion medium is regulated to not less than 1,000 mPa·s, the photocatalyst coating composition can be significantly thickened in a drying process. Thus, phenomena such as aggregation of photocatalyst particles and inorganic oxide particles or uneven thickness of wet films formed of the photocatalyst coating composition that spreads in a wet state on a surface of a base (for example, the occurrence of orange peel) can be suppressed. The use of thickening agents having such properties can realize the formation of smooth and even photocatalyst coated films.

In the present invention, the viscosity of the thickening agent is determined with a Brookfield viscometer (for example, TV-10 manufactured by Toki Sangyo Co., Ltd.) or a rheometer (for example, HAAKE MARSII manufactured by Thermo Scientific). The viscosity is measured with the Brookfield viscometer under conditions of a rotor rotation speed of 6 rpm and a measurement temperature of 25°C. The rotor usable in the measurement is L adaptor when the viscosity of a sample is less than 100 mPa·s; the roater usable in the measurement is M1 rotor when the viscosity of a sample is 100 mPa·s or more to less than 1,000 mPa·s; the roater usable in the measurement is M2 rotor when the viscosity of a sample is 1,000 mPa·s or more to less than 5,000 mPa·s; and the roater usable in the measurement is M3 rotor when the viscosity of a sample is not less than 5,000 mPa·s. The viscosity is measured with the rheometer under conditions of a temperature of 25°C. A corn plate (60 mmφ, 1°) is used as a sensor.

In the present invention, preferably, the thickening agent is contained in an amount of 0.01% or more by mass to 1% or less by mass. When the content of the thickening agent is in above defined range, the viscosity of the photocatalyst coating composition can be regulated to a low level of not more than 10 mPa·s. Thus, the photocatalyst coating composition according to the present invention has a high level of fluidity and a high leveling property immediately after coating. Besides, when the content of the thickening agent is in above defined range, the viscosity of the photocatalyst coating composition, when the concentration thereof is condensed tenfold, can be regulated to a high level of not less than 40 mPa·s. That is, as a wet film formed of the photocatalyst coating composition that spreads in a wet state on a surface of a base is dried, the concentration of the thickening agent increases, leading to an increase in the viscosity of the wet film. Thus, the fluidity of the wet film is lowered, and, therefore, the aggregation of particle components (the photocatalyst particles and the inorganic oxide particles) contained therein is suppressed. Consequently, smooth and even photocatalyst coated films can be formed without the production of aggregated particles. According to a preferred embodiment of the present invention, the photocatalyst coating composition, when the concentration thereof is condensed tenfold, has a viscosity of not less than 80 mPa·s. The viscosity above is determined at a shear rate of 1.0 s⁻¹ and at 25°C with a rheometer.

In the present invention, any one or both of clay-based thickening agents containing clay-based minerals as components and organic-based thickening agents containing organic polymers as components can be used as the thickening agents having the above rheological properties. In the present invention, clay-based thickening agents having the above rheological properties can be suitably utilized. Among the clay-based thickening agents, those containing synthetic clay can be suitably utilized. Preferred Examples of the synthetic clays include bare synthetic clays that is not subjected to hydrophobification treatment. More preferred specific examples of synthetic clays include synthetic hectorite (tradename: Laponite RD and Laponite B (manufactured by Rock Wood)) and synthetic saponite (tradename: Lucentite (manufactured by CO-OP CHEMICAL CO., LTD.) and Smectone SA (manufactured by Kunimine Industries Co., Ltd.)). These clay-based thickening agents are highly effective in increasing viscosity along with an increase in concentration. Further, the clay is synthetic clay and thus is free from a problem of coloration. Regarding the size of particles contained in the synthetic clay, for example, the thickness is preferably 0.5 nm or more to 2 nm or less. For example, the particle diameter is preferably 10 nm or more to 50 nm or less. The size of particles contained in the synthetic clay is much smaller than the wavelength of visible light. Accordingly, a lowering in transparency derived from light scattering is less likely to occur.

### Other additives

In the present invention, the photocatalyst coating composition may contain surfactants as other additives. When the surfactant is contained, the surface tension is lowered and, consequently, the photocatalyst coating composition has an excellent leveling property when forming the coating. The surfactant functions to uniformly evaporate the dispersion medium and thus can offer the effect of unforming the film thickness. The surfactant is preferably a substance that has a high solubility in water mainly contained in the dispersion medium and is highly effective in reducing the surface tension. Such surfactants include acetylenediol-based surfactants and polyether-modified silicone-based surfactants. Photocatalyst coated films having satisfactorily lowered surface tension, high transparency and evenness can be obtained by adding the surfactant preferably in an amount of 0.01% by mass or more to 0.5% by mass or less.

### Process for producing photocatalyst coating composition

The photocatalyst coating composition according to the present invention is prepared by mixing the above components in a predetermined concentration range. Raw material for each of the particulate components is preferably sol because the particle diameter of each of the particulate components can be reduced. Preferably, each of the sols is basic, each of the sols is acidic, or each of the sols is neutral.

### Process for producing condensed photocatalyst coating composition

In order to obtain a ten-fold condensed photocatalyst coating composition, a method may be utilized that includes removing the dispersion medium from the photocatalyst coating composition by distillation to condense the composition. In this method, however, heating possibly causes a change in state of dispersion of the photocatalyst particles and the inorganic oxide particles. Thus, a method is preferred in which the dispersion medium is removed at room temperature by vacuum distillation or with a rotary evaporator. Alternatively, a method may also be adopted that includes coating the photocatalyst coating composition on a surface of a flat base, removing the dispersion medium, and collecting the condensed photocatalyst coating composition with a tool such as a squeeze before the dispersion medium is completely removed. Further, when the concentration of the raw materials for the photocatalyst coating composition is satisfactorily high, a method may also be utilized in which a composition having a ten-fold increased concentration is previously prepared.

### Photocatalytic body and production method thereof

The photocatalyst coating composition according to the present invention is applied on a surface of a base to form a photocatalyst coated film. Thus, a photocatalytic body including at least a base and a photocatalyst coated film formed on a surface of the base is obtained.

### Base

Preferable bases on which the photocatalyst coating composition according to the present invention can be applied include ceramic inorganic materials such as glass and tiles and resin materials such as PMMA and polycarbonates.

### Pretreatment of base

In the present invention, the base is preferably pretreated to ensure the wettability of the surface of the base, whereby an even photocatalyst coated film can be formed. For example, cleaning the base with cleaning agents including surfactants and polishing agents such as cerium oxide powder may be mentioned as a preferable method for ensuring the wettability.

### Application on base

The photocatalyst coating composition according to the present invention can be applied on the base, for example, by coating methods such as spray coating, brush coating, and hand coating using a sponge impregnated with the coating composition.

The application amount of the photocatalyst coating composition according to the present invention is regulated so that the thickness of the photocatalyst coated film after drying is preferably about 50 nm, although the application amount depends upon the solid concentration of the photocatalyst coating composition. When the film thickness in this range is ensured, satisfactory photocatalytic activity and hydrophilifiability can be obtained and, at the same time, an optical influence such as the occurrence of interference color caused by photocatalyst coated films can be avoided.

### Formation of photocatalyst coated film

After the application of the photocatalyst coating composition according to the present invention on the base, a wet film formed of the photocatalyst coating composition that spreads in a wet state on the surface of the base is dried. The wet film is preferably air-dried. Since air-drying can be implemented more slowly over time than a drying using heating means (such as drier), the leveling is advancing more preferably and the film thickness becomes more even, contributing to the formation of photocatalyst coated films having better appearance. In the present invention, preferably, the drying time of the wet film is approximately 2 minutes or longer.

### Photocatalytic film

The photocatalyst coated film thus obtained has excellent transparency. Specifically, the difference obtained by subtracting the haze of the transparent base from the haze of the photocatalytic body that includes the transparent base and the photocatalyst coated film formed on the surface of the base (a change in haze between before and after the application of the photocatalyst coating composition: ΔHz) can be regulated to not more than 0.5%. An absolute value of the difference ΔHz between the haze of the base and the haze of the photocatalytic body is preferably not more than 0.35%.

### EXAMPLES

### (Raw materials)

Photocatalyst particles: A basic water dispersion containing anatase-type titanium oxide fine particles, " Tynoc A6" manufactured by Taki Chemical Co., Ltd., particle diameter 10 nm
Inorganic oxide particles: A basic water dispersion containing silica fine particles, "Snowtex XS" manufactured by Nissan Chemical Industry Ltd., particle diameter 4 nm or more to 6 nm or less
Thickening agent 1: Clay-based thickening agent "Laponite B" manufactured by Rock Wood Additives Ltd.
Thickening agent 2: Clay-based thickening agent "Laponite RD" manufactured by Rock Wood Additives Ltd.
Thickening agent 3: Polyether polyurethane-based thickening agent "Rheolate 288" manufactured by Elementis Japan
Thickening agent 4: Clay-based thickening agent "LUCENTITE SWN" manufactured by CO-OP CHEMICAL CO., LTD.
Thickening agent 5: Clay-based thickening agent "Sumecton SA" manufactured by Kunimine Industries Co., Ltd.
Thickening agent 6: Clay-based thickening agent "Laponite RDS" manufactured by Rock Wood Additives Ltd.
Surfactant: Polyether-modified silicone "KF-643" manufactured by The Shin-Etsu Chemical Co., Ltd.

### (Process for preparing photocatalyst coating composition)

A thickening agent was added to and thoroughly mixed with ion-exchanged water to previously prepare a 3 mass% solution as a mother liquid of the thickening agent. This mother liquid was weighed and diluted with ion-exchanged water so that the concentration of the thickening agent in the photocatalyst coating composition was a predetermined one. Thereafter, a dispersion containing inorganic oxide particles and then a dispersion containing photocatalyst particles were added to this solution at inorganic oxide particles : photocatalyst particles = 8 : 2 in terms of mass ratio, followed by thoroughly mixing. At that time, the two types of dispersions were added so that the total solid concentration of the photocatalyst particles and the inorganic oxide particles was 0.6% by mass.

For the photocatalyst coating composition containing the thickening agent 3, the surfactant was further added.

For Reference Examples 7 and 8, photocatalyst coating compositions were individually prepared in the same manner as in Example 2, except that the total solid concentration of the photocatalyst particles, the inorganic oxide particles and the thickening agent was 5 times and 10 times higher than that in Example 2. For Reference Examples 9 and 10, photocatalyst coating compositions were individually prepared in the same manner as in Comparative Example 1, except that the total solid concentration of the photocatalyst particles and the inorganic oxide particles was 5 times and 10 times higher than that in Comparative Example 1.

### (Process for preparing photocatalytic body)

Soda lime glass was provided as a base. Subsequently, the surface of the glass was washed with a polishing agent containing a cerium oxide powder to render the surface of the glass hydrophilic. The surface of the glass was then well rinsed with ion-exchanged water and air-dried. The photocatalyst coating composition prepared as above was coated on the base with a short-hair urethane roller (6SC10, manufactured by Ohtsuka Brush Mfg. Co., Ltd.) to form a wet film. The application amount was 5 g/m². After the coating, the base was allowed to horizontally and statically stand and was then air-dried to obtain a photocatalytic body formed the photocatalyst dry film on the base.

### (Evaluation method)

### • Measurement of viscosity

The viscosity was measured with a Brookfield viscometer (manufactured by Toki Sangyo Co., Ltd., TV-10) or a rheometer (manufactured by Thermo Scientific, HAAKE MARSII). The Brookfield viscometer was used under conditions of a rotation speed of 6 rpm and a temperature of 25°C. The rotor used in the measurement was L adaptor when the viscosity of the sample was less than 100 mPa·s; the rotor used in the measurement was M1 rotor when the viscosity of the sample was 100 mPa·s or more to less than 1,000 mPa·s; the rotor used in the measurement was M2 rotor when the viscosity of the sample was 1,000 mPa·s or more to less than 5,000 mPa·s; and the rotor used in the measurement was M3 rotor when the viscosity of the sample was not less than 5,000 mPa·s. When the rheometer was used, the viscosity was measured under a condition of a temperature of 25°C, and a corn plate (60 mmφ, 1°) was used as a sensor.

### • Measurement of haze

Haze was measured with a haze meter (manufactured by BYK Gardner, Haze Guard plus). The difference between the haze of the photocatalytic body and the haze of the base, ΔHz (in %) was determined.

### • Evaluation of appearance

The state of the wet film in coating the photocatalyst coating composition on the base and the state of the photocatalyst coated film obtained by drying the wet film were visually observed.

### (Reference Examples 1 to 6)

The following test was carried out to evaluate the relationship between the concentration of the thickening agent and the viscosity of the solution below.

### • Testing method

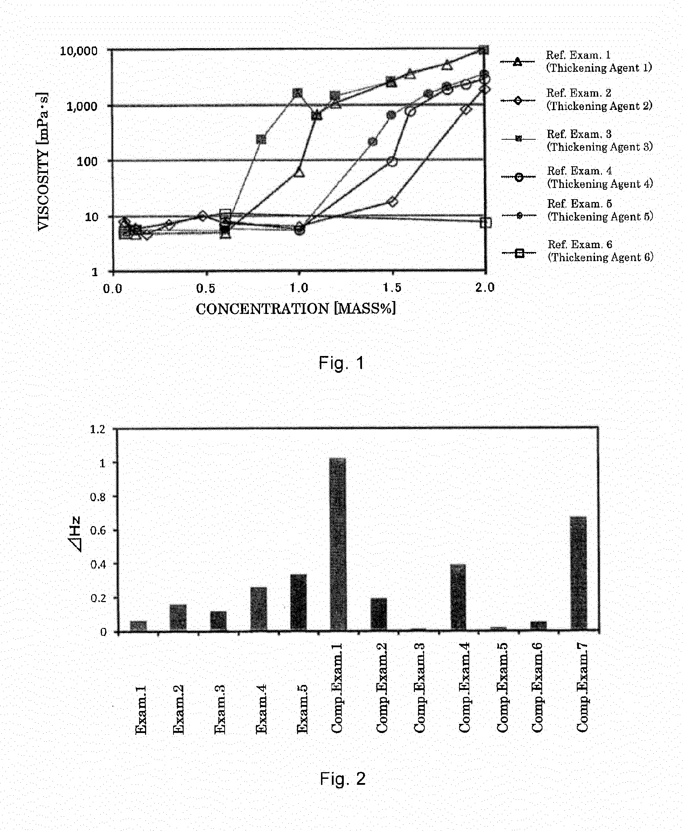

A solution having a thickening agent concentration of 3% by mass was previously prepared as a mother liquid by adding any one of thickening agents 1 to 6 to ion-exchanged water and thoroughly mixing them together. The mother liquid was diluted with ion-exchanged water to obtain a solution whose concentration was adjusted to a predetermined concentration, followed by the measurement of viscosity of the solution with a Brookfield viscometer. The results are shown in Fig. 1.

For Reference Examples 1 to 5, when the concentration of the thickening agent was 0.1% by mass, the viscosity of the solution was not more than 10 mPa·s, whereas, when the concentration of the thickening agent was 2% by mass, the viscosity of the solution was not less than 1,000 mPa·s. That is, for Reference Examples 1 to 5 where thickening agents 1 to 5 were used, the viscosity of the solution increased with an increase in the concentration of the thickening agent.

On the other hand, for Reference Example 6, when the concentration of the thickening agent was 0.1% by mass, the viscosity of the solution was not more than 10 mPa·s, whereas, even when the concentration of the thickening agent was 2% by mass, the viscosity of the solution was not more than 10 mPa·s. That is, for Reference Example 6 where thickening agent 6 was used, the viscosity of the solution did not increase with an increase in the concentration of the thickening agent.

### (Examples 1 to 5 and Comparative Examples 1 to 7)

Photocatalyst coating compositions were prepared using thickening agents, the type and concentration of which were as shown in Table 1. Photocatalytic bodies were prepared using the photocatalyst coating compositions. The evaluation results of the photocatalytic bodies are shown in Table 1. A graph showing the relationship between the concentration of the thickening agent and the haze difference ΔHz for each of Examples and Comparative Examples is shown in Fig. 2.

For Examples 1 to 5, the viscosity of the photocatalyst coating composition was not more than 10 mPa·s. Further, due to an influence of thickening agents 1 to 5 contained in photocatalyst coating compositions, the viscosity of the photocatalyst coating composition increased with an increase in the concentration of the thickening agent induced by drying. For Examples 1 to 5, the appearance of the photocatalytic body was good. For Examples 2 and 4, the appearance of the photocatalytic body was especially good.

For Comparative Examples 2 to 6, the viscosity of the photocatalyst coating composition was more than 10 mPa·s and a poor appearance such as uneven coating occurred. For Comparative Examples 1 and 7, the viscosity of the photocatalyst coating composition was not more than 10 mPa·s. However, for Comparative Example 1 where the thickening agent was not contained, an increase in viscosity of the photocatalyst coating composition induced by drying did not occur. For Comparative Example 7, even when the concentration of the thickening agent increased, the viscosity of the photocatalyst coating composition did not increase. For Comparative Examples 1 and 7, a poor appearance due to clouding occurred.

**[Table 1]**

| | Thickening agent | | Viscosity of composition (mPa·s, 6 rpm, 25°C) | Viscosity of composition when the concentration thereof is condensed tenfold (mPa·s, 6 rpm, 25°C) | ΔHz (%) | Appearance |
|---|---|---|---|---|---|---|
| | Type | Concentration (% by mass) | | | | |
| Example 1 | Thickening agent 1 | 0.1 | 8.0 | 53 | 0.06 | Good |
| Example 2 | Thickening agent 2 | 0.1 | 8.3 | 88 | 0.16 | Especially good |
| Example 3 | Thickening agent 3 | 0.1 | 5.2 | 43 | 0.12 | Good |
| Example 4 | Thickening agent 4 | 0.1 | 8.0 | 745 | 0.26 | Especially good |
| Example 5 | Thickening agent 5 | 0.1 | 5.9 | 58 | 0.33 | Good |
| Comparative Example 1 | Free from thickening agent | | 5.4 | - | 1.02 | Especially poor (Cloudy) |
| Comparative Example 2 | Thickening agent 1 | 1.2 | 1090 | - | 0.19 | Poor (Uneven coating) |
| Comparative Example3 | Thickening agent 2 | 1.9 | 847 | - | 0.01 | Poor (Uneven coating) |
| Comparative Example 4 | Thickening agent 3 | 1.0 | 1650 | - | 0.39 | Especially poor (Cissing) |
| Comparative Example 5 | Thickening agent 4 | 1.6 | 785 | - | 0.02 | Poor (Uneven coating) |
| Comparative Example 6 | Thickening agent 5 | 1.6 | 1040 | - | 0.05 | Poor (Uneven coating) |
| Comparative Example 7 | Thickening agent 6 | 0.1 | 5.9 | - | 0.67 | Especiallyy poor (Cloudy) |

### (Examples 6 to 9)

Photocatalyst coating compositions were prepared using the thickening agent 5. Photocatalytic bodies of Examples 6 to 9 were prepared using photocatalyst coating compositions with the concentration of the thickening agent 5 being varied. The evaluation result of the photocatalytic bodies are shown in Table 2.

As shown in Table 2, a good appearance could be obtained when the concentration of the thickening agent contained in the photocatalyst coating composition was 0.01% or more by mass to 1% or less by mass.

**[Table 2]**

| | Thickening agent | | Viscosity of composition (mPa·s, 6 rpm, 25°C) | ΔHz (%) | Appearance |
|---|---|---|---|---|---|
| | Type | Concentration (% by mass) | | | |
| Example 6 | Thickening agent 5 | 0.01% | - | 0.42 | Good |
| Example 7 | | 0.06% | - | 0.33 | Good |
| Example 8 | | 0.60% | 5.9 | 0.16 | Good |
| Example 9 | | 1.00% | 5.6 | 0.17 | Good |

### (Example 2, Comparative Example 1, and Reference Examples 7 to 10)

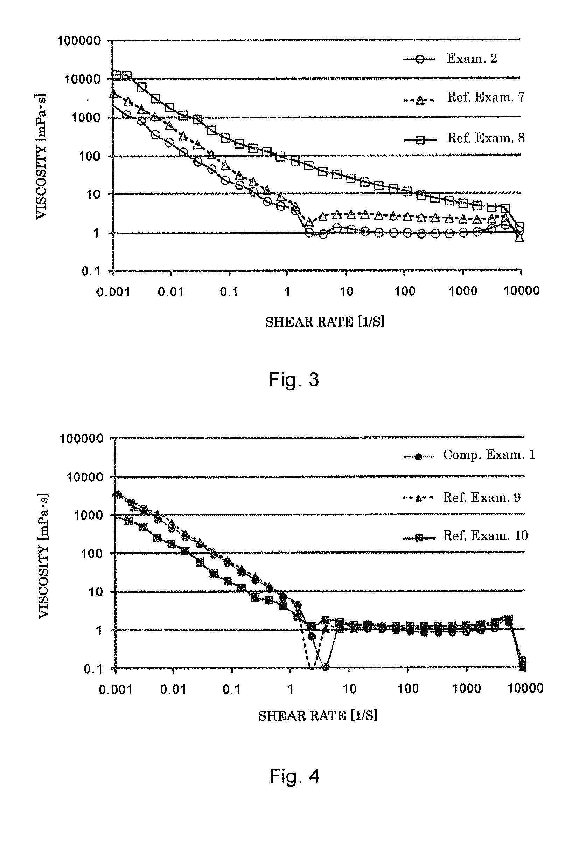

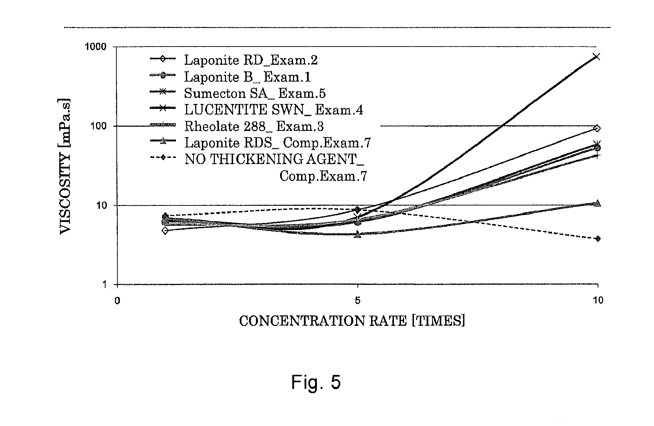

The shear rate-viscosity curve for the photocatalyst coating composition containing the thickening agent 2 (Example 2) and the shear rate-viscosity curve for the photocatalyst coating compositions obtained by increasing the total solid concentration of the photocatalyst coating composition of Example 2 fivefold and tenfold (Reference Examples 7 and 8) are shown in Fig. 3. The shear rate-viscosity curve for the photocatalyst coating composition free from the thickening agent (Comparative Example 1) and the shear rate-viscosity curve for the photocatalyst coating compositions obtained by increasing the total solid concentration of the photocatalyst coating composition of Comparative Example 1 fivefold and tenfold (Reference Examples 9 and 10) are shown in Fig. 4. Further, the relationship between the total solid concentration (times) and the viscosity at a shear rate of 1.0 s⁻¹ for each of the photocatalyst coating compositions of Examples 1 to 5 and Comparative Example 7 that contained the thickening agent and of Comparative Example 1 that were free from the thickening agent and the relationship between the total solid concentration (times) and the viscosity at a shear rate of 1.0 s⁻¹ for each of the photocatalyst coating compositions obtained by increasing the total solid concentration of each of the photocatalyst coating compositions of Example 1 to 5 and Comparative Examples 1 and 7 fivefold and tenfold are shown in Fig. 5. As can be seen from Fig. 5, the viscosity of each of the photocatalyst coating compositions obtained by condensing the total solid concentration of the photocatalyst coating compositions of Examples 1 to 5 tenfold was not less than 40 mPa·s. Among them, the viscosity of each of the photocatalyst coating compositions obtained by condensing the total solid concentration of the photocatalyst coating compositions of Examples 2 and 4 tenfold was not less than 80 mPa·s.

For the photocatalyst coating compositions of Examples 1 to 5 that contained the thickening agent, the viscosity increased with the increase in the total solid concentration, whereas, for the photocatalyst coating compositions of Comparative Examples 1 that were free from the thickening agent and of Comparative Example 7 that contained the thickening agent, a change in viscosity hardly occurred.

## Claims

1. A photocatalyst coating composition comprising photocatalyst particles, inorganic oxide particles other than the photocatalyst particles, a dispersion medium mainly composed of water, and a thickening agent, wherein
the composition has a viscosity of 0 mPa·s or more to 10 mPa·s or less and, when the concentration of the composition is condensed tenfold, has a viscosity of not less than 40 mPa·s as determined under conditions of a shear rate of 1.0 s⁻¹ and a temperature of 25°C with a rheometer.

2. The photocatalyst coating composition according to claim 1, wherein the composition, when the concentration thereof is condensed tenfold, has a viscosity of not less than 80 mPa·s as determined under conditions of a shear rate of 1.0 s⁻¹ and a temperature of 25°C with a rheometer.

3. The photocatalyst coating composition according to claim 1, wherein
a 0.1% by mass solution of the thickening agent in the dispersion medium has a viscosity of 0 mPa·s or more to 10 mPa·s or less in as determined under conditions of a rotation speed of 6 rpm and a temperature of 25°C with a Brookfield viscometer and
a 2% by mass solution of the thickening agent in the dispersion medium has a viscosity of not less than 1,000 mPa·s as determined under conditions of a rotation speed of 6 rpm and a temperature of 25°C with a Brookfield viscometer.

4. The photocatalyst coating composition according to claim 1, wherein the content of the thickening agent is 0.01% or more by mass to 1% or less by mass.

5. The photocatalyst coating composition according to claim 1, wherein the thickening agent is a clay-based thickening agent, an organic-based thickening agent, or a combination of the clay-based thickening agent and the organic-based thickening agent.

6. A photocatalyst coated film consisting of the photocatalyst coating composition according to claim 1, the photocatalyst coated film being formed on a surface of a base.

7. A photocatalytic body comprising a base and a photocatalyst coated film formed on a surface of the base, the photocatalyst coated film consisting of the photocatalyst coating composition according to claim 1.

8. The photocatalytic body according to claim 7, wherein the difference between the haze of the base and the haze of the photocatalytic body, ΔHz, is not more than 0.5 in terms of an absolute value.
